**Europäisches Patentamt**

**European Patent Office**

**Office européen des brevets**

(19)

(11) Numéro de publication: **0 095 425 B1**

(12) **FASCICULE DE BREVET EUROPEEN**

(45) Date de publication du fascicule du brevet:
26.08.87

(51) Int. Cl.⁴: **G 01 N 27/22**

(21) Numéro de dépôt: **83401051.4**

(22) Date de dépôt: **26.05.83**

(54) **Dispositif de mesure de la teneur en eau de matériaux granulaires.**

(30) Priorité: **26.05.82 FR 8209168**

(43) Date de publication de la demande:
**30.11.83 Bulletin 83/48**

(45) Mention de la délivrance du brevet:
**26.08.87 Bulletin 87/35**

(84) Etats contractants désignés:
**AT BE CH DE GB IT LI LU NL SE**

(56) Documents cités:
**DE - B - 2 522 826**
**FR - A - 1 507 011**
**FR - A - 2 384 256**
**GB - A - 1 419 235**
**US - A - 4 044 607**

**IEEE TRANSACTIONS ON GEOSCIENCE ELECTRONICS, vol. GE-16, no. 2, avril 1978, pages 112-118, IEEE, New York, USA; D.WOBSCHALL: "A frequency shift dielectric soil moisture sensor"**

(73) Titulaire: **Etat Français Représenté par le Ministère de l'Environnement et du Cadre de Vie Laboratoire Central Des Ponts et Chaussees, 58, Boulevard Lefebvre, F-75732 Paris Cédex 15 (FR)**

(72) Inventeur: **Delmulle, Jean-Pierre, Le Cormier Hauville, F-27350 Routot (FR)**
Inventeur: **Torchet, Bernard, Clos Motigny 38, avenue de Verdun, F-41000 Blois (FR)**

(74) Mandataire: **Thevenet, Jean-Bruno et al, Cabinet BEAU DE LOMENIE 55 rue d'Amsterdam, F-75008 Paris (FR)**

## Description

La présente invention a pour objet un dispositif de mesure de la teneur en eau de matériaux granulaires ou pulvérulents, notamment de matériaux en mouvement sur une bande transporteuse ou dans une conduite, du type comprenant une sonde capacitive munie d'au moins deux électrodes séparées par une zone isolante et en contact avec le matériau à étudier, la sonde présentant un corps cylindrique, un bâti de support de la sonde capacitive, et un circuit oscillateur haute fréquence associé aux électrodes afin de fournir une tension alternative de fréquence variable avec la teneur en eau, la sonde (10) étant montée sur le bâti par l'intermédiaire de paliers de manière à pouvoir présenter un mouvement de rotation sur elle-même par rapport au bâti (100).

Il est déjà connu d'utiliser des sondes capacitives pour la mesure de la teneur en eau de matériaux, notamment de matériaux se présentant sous la forme de granulats, tels que des matériaux servant à la formation de bétons ou de sols. Ainsi, le brevet français 2 062 078 décrit un capteur capacitif massif de forme prismatique qui est installé à demeure au sein du matériau dont on veut mesurer la teneur en eau. Ce capteur capacitif connu est associé à un câble de liaison de qualité haute fréquence pour l'alimentation du capteur en courant alternatif de fréquence comprise entre 10 et 100 MHz.

Le certificat d'addition français 2 192 711 décrit également un capteur capacitif de teneur en eau du type précité, dans lequel la cellule de mesure est au moins partiellement conique et est associée à des moyens aptes à transformer la variation capacitive du capteur en une variation de la fréquence du signal alternatif électrique délivré par le capteur.

Les capteurs capacitifs de type connu sont assez bien adaptés à des mesures in situ, pour lesquelles la sonde de mesure est ancrée à poste fixe dans un sol par exemple, ou à des mesures de teneur en eau de matériaux sans fines. Ces capteurs capacitifs présentent en revanche des inconvénients lorsqu'il s'agit de mesurer la teneur en eau de certains matériaux granulaires, notamment de matériaux possédant des fines, lorsque ces matériaux sont en mouvement sur une bande transporteuse ou dans une canalisation et passent au contact de la sonde capacitive sur les parois de laquelle sont placées les électrodes de mesure. En effet, dans ce cas, il se produit souvent un colmatage de certaines particules du matériau qui restent collées sur le corps de la sonde. Il s'ensuit des erreurs de mesure qui rendent ces sondes peu performantes en pratique.

On connaît également par le document DE-B-2 522 826 un dispositif de mesure de l'humidité contenue dans une matière en mouvement constituée par exemple par des feuilles de tabac entraînées par un convoyeur en formant un flux continu.

Un tel dispositif comporte une sonde capacitive de mesure avec une source de courant haute fréquence, au moins deux électrodes de mesure, une impédance de référence, un organe de commutation et un circuit comparateur pour comparer les signaux de référence produits aux bornes de l'impédance de référence et ceux produits aux bornes des électrodes en contact avec le matériau dont la teneur en eau est à mesurer. Les électrodes sont agencées sur un tambour cylindrique tournant et sont reliées au circuit résonnant par des contacts tournants.

Le tambour cylindrique est agencé de telle manière que son axe soit disposé transversalement par rapport à la direction de l'écoulement des feuilles de tabac, et le tambour est entraîné en mouvement, dans le même sens que celui de l'écoulement des feuilles, directement par le produit, lui-même entraîné par un convoyeur.

L'effet auto-nettoyant éventuel dû aux frottements répétés du tambour cylindrique sur le produit entraîné par le convoyeur reste très limité puisque la vitesse relative entre le produit et la sonde est toujours faible, la sonde tournant dans le sens d'écoulement du produit. De plus, certains matériaux, notamment ceux comportant des fines humides, contrairement aux feuilles de tabac, sont impropres à créer un effet auto-nettoyant effectif. Par ailleurs, si le flux de matériau ralentit ou vient à s'interrompre momentanément, la rotation de la sonde est ralentie ou interrompue et un encrassement peut alors se produire. De plus, compte tenu de la disposition de l'axe du tambour cylindrique perpendiculairement au sens d'écoulement du matériau et de l'énergie nécessaire pour que le matériau puisse entraîner la sonde en rotation, les mesures sont rendues difficiles ou peu précises.

Le document FR-A-2 384 256 décrit encore un dispositif de mesure de l'humidité d'une matière fluante comprenant une sonde qui est immergée dans la matière pratiquement homogénéisée à l'intérieur du récipient, pour effectuer une mesure, un déplacement relatif étant provoqué entre la sonde et cette matière. La sonde est retirée à la fin de la mesure pour être nettoyée et stockée dans un lieu protégé. Ce document FR-A-2 384 256 concerne ainsi un dispositif permettant d'effectuer une mesure dans un récipient à l'intérieur duquel a déjà été effectuée une homogénéisation et qui comprend une dose isolée de la matière à analyser. Un nettoyage de la sonde est effectué à la fin de chaque mesure, mais ceci implique un retrait de la sonde qui doit être nettoyée dans un environnement différent de celui dans lequel elle est plongée pendant les mesures. Ceci exclut de pouvoir effectuer de très brèves séquences de nettoyage entre deux phases de mesure, car le temps nécessaire pour sortir la sonde du milieu de mesure, pour la nettoyer, la remettre dans un lieu protégé de remise en température de référence et la replonger dans le milieu de mesure, est nécessairement relativement long.

Le document US-A-4 044 607 décrit par ailleurs une sonde de mesure d'humidité placée à poste fixe dans la matière à contrôler. Ce brevet n'évoque toutefois pas les problèmes de colmatage et de nettoyage de la sonde.

Le document GB-A-1 419 235 concerne également une sonde de mesure d'humidité dans les matériaux granulaires, mais n'évoque lui non plus en aucune manière les problèmes de colmatage et de nettoyage de la sonde.

La présente invention vise précisément à remédier aux inconvénients précités et à réaliser un dispositif de mesure de la teneur en eau de matériaux granulaires ou pulvérulents qui soit efficace même dans le cas de matériaux granulaires ou pulvérulents possédant des fines et soit particulièrement adapté à des mesures de teneur en eau effectuées sur des matériaux en mouvement en mouvement tels que des écoulements dans des canalisations ou trémies ou sur des bandes transporteuses.

La présente invention a en particulier pour objet d'adapter la disposition de la sonde au sein du matériau sur lequel doivent être effectuées les mesures et d'améliorer la qualité du nettoyage de la sonde afin d'accroître la qualité et la fiabilité des mesures sans ralentir le rythme des mesures.

Ces buts sont atteints grâce à un dispositif de mesure du type mentionné au début caractérisé en ce que l'axe de la sonde est disposé sensiblement selon la direction de déplacement des matériaux en mouvement, en ce que le dispositif comprend en outre des moyens spécifiques d'entraînement en rotation de la sonde par rapport au bâti par intermittence à intervalles réguliers pendant un temps limité et des moyens de nettoyage montés sur le bâti et coopérant avec le corps cylindrique de la sonde pendant les mouvements de rotation de celle-ci, en ce qu'une mesure de teneur en eau du matériau examiné est effectuée de façon permanente lorsque la sonde est en position de repos, et en ce que la position axiale de la sonde est maintenue inchangée lors du passage de sa position de repos à sa position de rotation sur elle-même ou vice-versa.

De façon plus particulière, les moyens de nettoyage comprennent au moins une raclette supportée par un bras relié au bâti, et appliquée contre la surface du corps cylindrique de la sonde.

Selon un mode de réalisation avantageux, des moyens de nettoyage comprennent plusieurs raclettes distinctes alignées le long d'une génératrice du corps cylindrique de la sonde et supportées chacune de manière indépendante par un bras relié au bâti.

De préférence, chaque raclette est reliée au bâti par l'intermédiaire d'un bras articulé et des éléments souples sont associés à l'articulation du bras pour transmettre à la raclette correspondante une pression d'appui sur le corps de la sonde.

Le corps cylindrique de la sonde peut être prolongé à l'avant par une partie tronconique. Dans ce cas, au moins une raclette supportée par un bras relié au bâti est appliquée contre la surface de la partie tronconique de la sonde.

La sonde est montée de manière à pouvoir tourner sur deux ensembles de roulement disposés à la partie inférieure de deux montants du bâti et les moyens d'entraînement en rotation de la sonde par rapport au bâti comprennent un groupe moto-réducteur disposé dans le bâti au-dessus de la sonde, et capable d'entraîner celle-ci en rotation par sa partie arrière.

Le montant du bâti qui supporte la partie avant de la sonde présente avantageusement un nez en forme d'ogive disposé selon l'axe de la sonde.

Selon un mode de réalisation particulier le dispositif comprend une première électrode centrale constituée par une plaque conductrice incurvée disposée longitudinalement à la périphérie du corps cylindrique isolant de la sonde dans la partie inférieure de ce corps lorsque la sonde est en position de repos, et une deuxième électrode latérale comprenant deux plaques conductrices incurvées disposées longitudinalement à la périphérie du corps cylindrique de la sonde à faible distance de part et d'autre de la première électrode centrale.

Le dispositif comprend des circuits électroniques disposés à l'intérieur du corps cylindrique de la sonde et reliés d'une part aux électrodes de la sonde par des connexions fixes et d'autre part à des prises extérieures à l'aide d'un contact tournant.

Selon l'invention, les circuits électroniques disposés à l'intérieur du corps cylindrique de la sonde comprennent un oscillateur haute fréquence et des circuits diviseurs de fréquence, associés à des circuits d'adaptation afin de permettre la fourniture d'un signal basse fréquence sur ledit contact tournant, tandis que des signaux haute fréquence sont appliqués sur les électrodes de la sonde.

De façon plus particulière, les circuits électroniques disposés à l'intérieur du corps cylindrique de la sonde sont alimentés avec une tension continue comprise entre environ 3,5 et 8 volts et de préférence voisine de 5 volts, la fréquence de l'oscillateur est comprise entre environ 10 et 100 MHz et de préférence comprise entre 35 et 45 MHz et la fréquence de sortie du signal basse fréquence fonction de la teneur en eau du matériau examiné est comprise entre environ 5 et 10 kHz et de préférence voisine de 7 kHz.

D'autres caractéristiques et avantages de l'invention ressortiront de la description d'un mode particulier de réalisation de l'invention, donnée à titre d'exemple en référence au dessin annexé, sur lequel:

– la figure 1 est une vue en coupe axiale d'une sonde de mesure selon l'invention, montée sur un bâti, mais le dispositif d'auto-nettoyage de la sonde ayant été ôté,

– la figure 2 est une vue en coupe selon le plan II–II de la figure 1,

– la figure 3 est une vue arrière, couvercle enlevé, du dispositif de la figure 1, montrant également le dispositif d'auto-nettoyage associé à la sonde et au bâti,

– la figure 4 est une demi-vue de dessus du dispositif de la figure 3 montrant le dispositif d'auto-nettoyage associé à la sonde, et

– la figure 5 représente le schéma des circuits électroniques disposés à l'intérieur du corps de sonde.

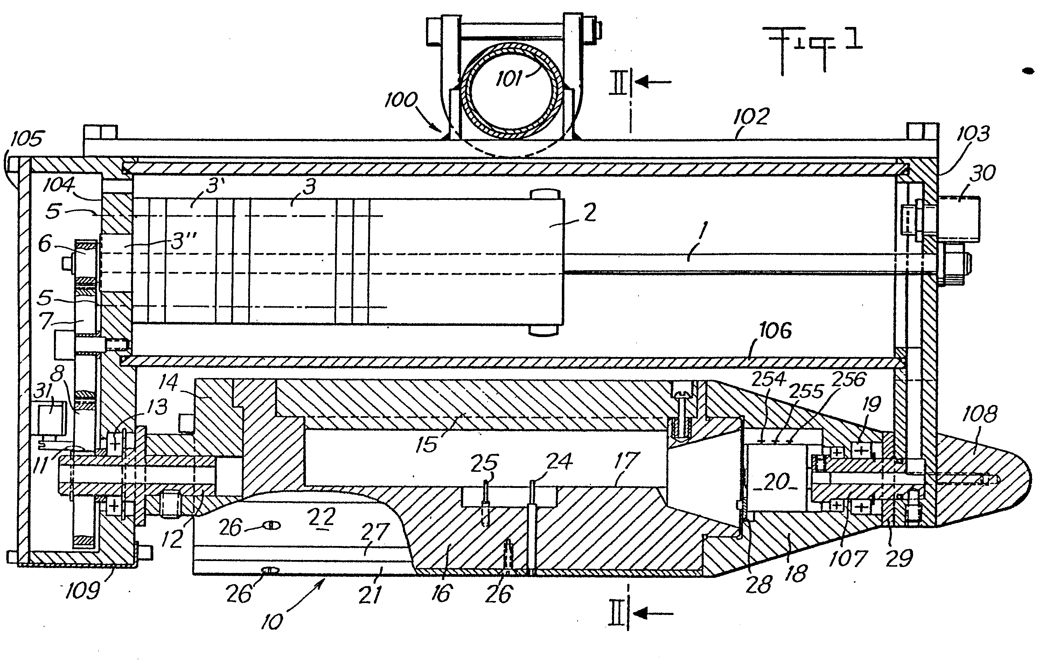

On voit sur la figure 1 le schéma mécanique d'une sonde capacimétrique adaptée à la mesure de la teneur en eau d'un matériau granulaire ou pulvérulent qui peut être constitué par un matériau servant à la fabrication de mélanges bitumineux ou hydrauliques ou encore par un produit agro-alimentaire sous forme de granulats.

La mesure de la teneur en eau d'un matériau est importante. Par exemple, dans le cas de mélanges bitumineux, il est utilisé des tambours-sécheurs-enrobeurs et, avec de telles machines, la teneur en bitume, qui est une caractéristique essentielle d'un mélange bitumineux, est directement liée au débit des granulats secs entrant dans le tambour, donc à la connaissance de leur teneur en eau.

Diminuer la consommation de matière pulvérulente, ciment notamment, dans le cas de la fabrication d'une grave traitée aux liants hydrauliques, nécessite aussi la connaissance de la teneur en eau des matériaux entrant dans le malaxeur de la centrale. Ne sachant pas mesurer la teneur en eau du mélange, le plus souvent mis en couche, sur la sauterelle d'alimentation du tambour ou du malaxeur, il est important de savoir mesurer la teneur en eau des matériaux sur le tapis de chaque doseur à granulats.

Le principe de mesure de la teneur en eau d'un matériau s'écoulant sur une bande transporteuse ou dans un conduit ou une trémie est le suivant. La sonde est plongée dans la veine de matériau. La forme de la sonde est de préférence réalisée de manière à permettre un très bon écoulement du matériau le long des parois sur lesquelles sont placées les électrodes métalliques. Le matériau glissant entre les électrodes constitue le diélectrique d'un condensateur qui est un élément d'un oscillateur électronique placé à l'intérieur du corps de sonde. La fréquence de l'oscillateur est inversement proportionnelle à la teneur en eau. Le signal en fréquence est transmis à un ensemble extérieur de traitement qui le transforme en tension et, compte tenu de l'étalonnage réalisé au départ, permet l'affichage d'une information de teneur en eau du matériau examiné.

L'un des problèmes essentiels liés à l'utilisation de sondes capacimétriques pour la mesure de teneurs en eau de matériaux en écoulement est constitué par le colmatage qui se produit régulièrement sur la sonde. En effet, dès lors qu'une partie du matériau reste collée sur le corps de la sonde, la mesure effectuée ne donne plus une information fidèle en ce qui concerne la teneur en eau du matériau en écoulement.

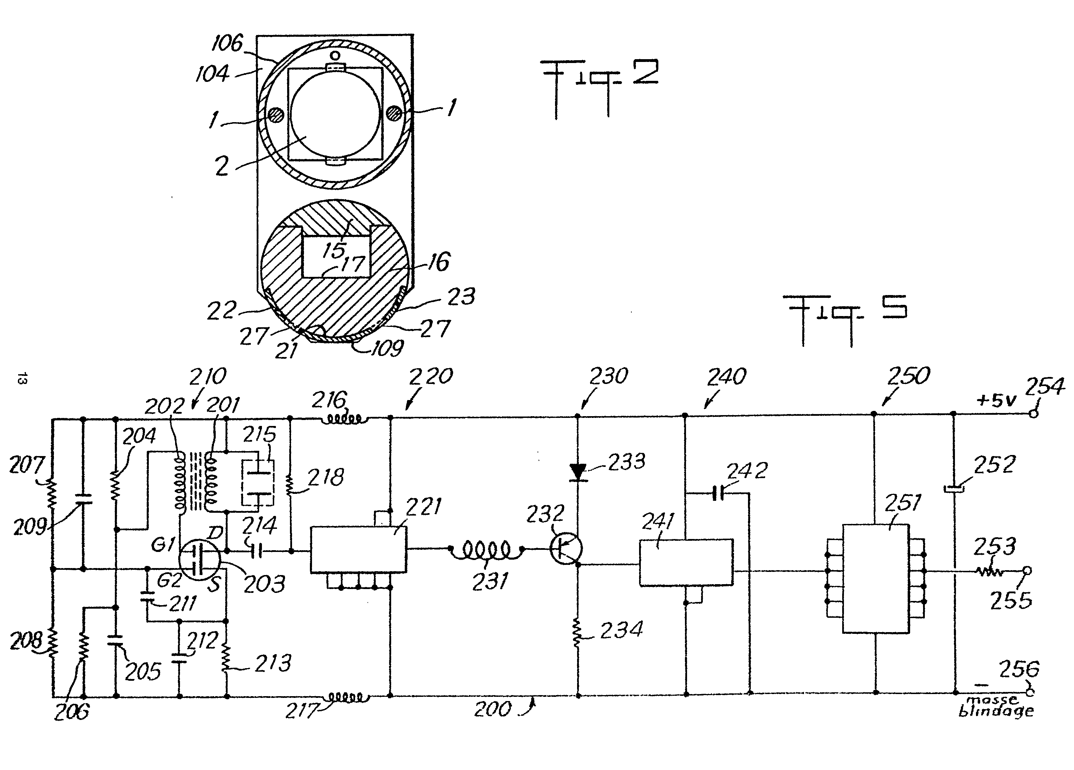

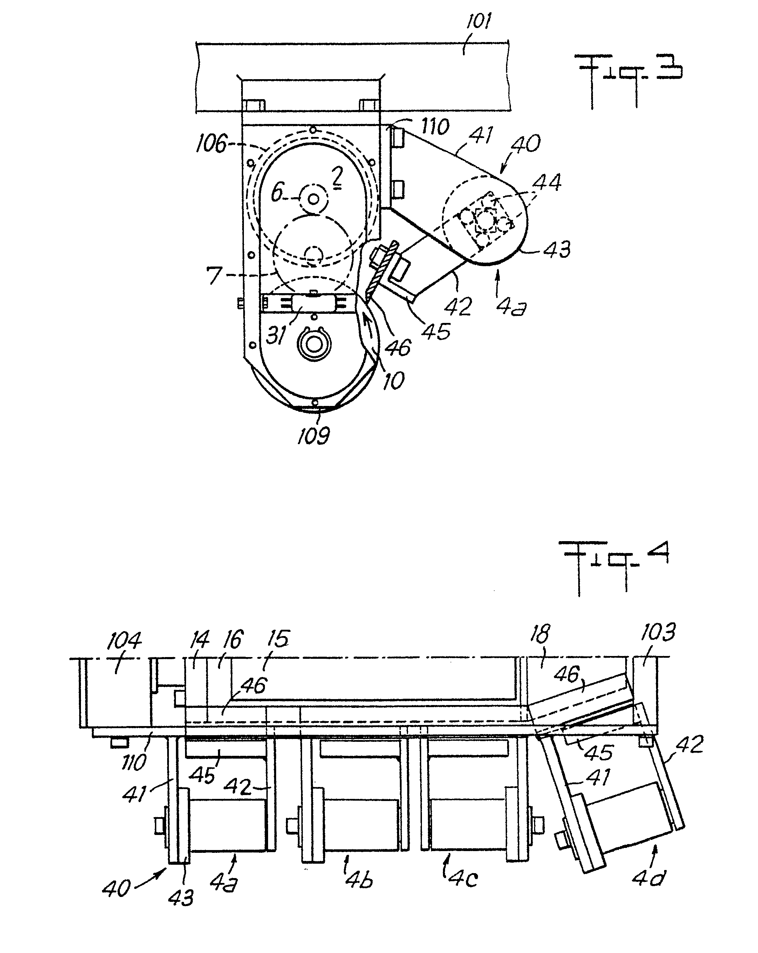

Selon l'invention, la sonde capacitive de mesure 10 n'est pas montée sur un bâti 100 de façon statique, mais au contraire est associée à des moyens d'entraînement tels qu'un moteur électrique 2, afin de pouvoir être mise en rotation autour de son axe. Des moyens de nettoyage 40 (Fig. 3 et 4) associés au bâti 100 et à la sonde 10 permettent un nettoyage automatique de la surface de la sonde lorsque celle-ci est entraînée en rotation.

Ainsi, le dispositif selon l'invention permet à la fois une mesure en continu instantanée pendant les intervalles de temps de mesure où la sonde est dans sa position de repos, et un nettoyage efficace du corps de la sonde pendant de brèves périodes de nettoyage où la sonde est mise en rotation et les mesures sont inhibées. Les périodes de nettoyage peuvent se répéter de façon prédéterminée à intervalles réguliers.

Le dispositif de mesure de la figure 1 est adapté pour être plongé dans un courant de matière s'écoulant de la droite vers la gauche selon le sens longitudinal de la sonde 10. La sonde 10 est maintenue en position par un bâti 100 qui comprend essentiellement un tube transversal de support 101, une plaque horizontale supérieure de bâti 102, fixée au tube 101, et des montants verticaux 103, 104 fixés à la plaque supérieure de bâti 102 et reliés entre eux par des tirants 1. Les montants 103, 104 constituent ainsi des flasques frontaux avant et arrière.

Un moteur électrique 2 associé à des réducteurs 3, 3' et présentant un flasque de sortie 3'' incorporé dans la paroi verticale arrière 104 du bâti est disposé au voisinage de la partie supérieure du bâti 100, à l'intérieur d'un tube de protection 106 placé entre la plaque supérieure 102 et la sonde 10. Le groupe moto-réducteur 2, 3, 3' fixé sur la paroi verticale 104 par des vis 5 est superposé à la sonde 10 en étant sensiblement parallèle à celle-ci. Un train de pignons 6, 7, 8 disposé derrière la paroi verticale 104 du bâti, et protégé par un couvercle arrière 105, transmet par une clavette 11 à un arbre 12 solidaire de la sonde 10 le mouvement d'entraînement communiqué par le groupe moto-réducteur 2, 3, 3', lorsque celui-ci est en marche.

La sonde de mesure 10 présente un corps cylindrique prolongé à sa partie avant par une partie tronconique 18. Le corps de la sonde 10 est de forme essentiellement cylindrique à section circulaire et se présente en deux parties principales 15, 16 définissant une cavité intérieure 17 (figure 1 et 2). Le corps de sonde comporte ainsi un corps de base 16 surmonté d'un chapeau amovible 15 donnant accès à la cavité 17. L'axe arrière 12 de la sonde 10 est monté dans une pièce terminale 14 raccordée à l'arrière du corps de base 16. Une partie tronconique 18 solidaire du corps cylindrique 15, 16 de la sonde prolonge celle-ci vers l'avant autour d'un axe 107 solidaire du montant avant 103 du bâti 100. La sonde 10 est montée sur des roulements 13, 19 qui sont situés respectivement dans le montant arrière 104 du bâti et autour d'un axe 107 fixé directement au montant avant 103.

Une rondelle de protection en caoutchouc est interposée entre le montant avant fixe 103 et la tête tronconique 18 de la sonde. Un nez en forme d'ogive 108 est en outre fixé sur le montant avant 103 dans le prolongement de l'axe de la sonde, afin de faciliter l'écoulement du matériau à examiner vers la tête tronconique 18 de la sonde et le corps cylindrique 16. A l'arrière du bâti, le montant 104 est lui-même complété par un pied dont la face inférieure porte une plaque d'usure 109.

Comme on peut le voir sur les figures 1 et 2, le corps 16 de la sonde 10 porte à sa partie périphérique des électrodes métalliques 21, 22, 23 fixées par des vis 26 au corps 16 réalisé, de même que le couvercle 15, la partie terminale arrière 14 et la tête tronconique 18 en une matière isolante, par exemple une matière moulée. Les électrodes 21, 22, 23 en forme de plaques incurvées, par exemple en acier inoxydable sont ancrées dans le corps 16 de la sonde et présentent une surface externe qui forme une partie de la surface cylindrique du corps de la sonde 10. Une électrode inférieure 21 est disposée à la partie médiane inférieure du corps de la sonde placée dans sa position de repos. L'électrode 21 s'étend dans le sens longitudinal de la sonde jusqu'à la limite de la partie tronconique 18. Deux parties d'électrode 22, 23 sont elles-mêmes disposées de façon symétrique de part et d'autre de l'électrode inférieure 21 en étant séparées de cette dernière par des portions 27 de matière isolante de même dimension. Des connexions 24, 25 relient respectivement l'électrode centrale inférieure 21 qui constitue une première électrode de condensateur et les électrodes latérales 22, 23 qui sont au même potentiel électrique et constituent une deuxième électrode de condensateur à des circuits électroniques disposés dans la cavité 17. Un contact tournant 20 ou collecteur à trois pistes disposé à l'intérieur de la tête tronconique 18 permet de relier les trois bornes de sortie 254, 255, 256 des circuits électroniques 200 disposés dans la cavité 17 et donc solidaires de la sonde 10 à une prise 30 montée sur le montant avant 103 du bâti. La prise 30 permet ainsi d'une part l'arrivée de fils d'alimentation du moteur électrique 2 disposé dans le tube de protection 106 et d'autre part les connexions nécessaires avec les circuits 200 associés à la sonde capacitive 10.

Le groupe moto-réducteur 2, 3, 3' entraîne en rotation la sonde 10 pendant les périodes de nettoyage de la sonde. Les mouvements de rotation de la sonde 10 permettent ainsi un nettoyage automatique du corps cylindrique 16, 15 de la sonde et des électrodes associées 21, 22, 23 grâce à la présence de raclettes 46 (figures 3 et 4) qui enlèvent tout dépôt de matière éventuel sur la surface périphérique de la sonde.

L'ensemble de nettoyage 40 de la sonde 10 sera décrit de façon plus détaillée en référence aux figures 3 et 4. La figure 4 montre la mise en œuvre de quatre ensembles individuels de nettoyage 4a, 4b, 4c, 4d comprenant chacun une raclette 46 coopérant avec la surface du corps cylindrique 15, 16 ou de la tête tronconique 18 de la sonde 10. Les quatre ensembles individuels de nettoyage 4a à 4d sont semblables les uns aux autres et un seul ensemble sera décrit en détail. Les trois ensembles de nettoyage 4a, 4b, 4c, présentent des raclettes dont la face active est parallèle à l'axe de la sonde tandis que l'ensemble de nettoyage 4d est incliné par rapport à l'axe de la sonde de manière que la face active de la raclette 46 de ce quatrième ensemble de nettoyage corresponde à une génératrice de la tête tronconique 18 de la sonde.

Chaque ensemble de nettoyage individuel 4a à 4d comprend un bras fixe 41 relié à une traverse longitudinale 110 du bâti fixée aux montants verticaux 103, 104.

Une articulation 43 relie un second bras 42 au bras fixe 41 et incorpore des éléments souples 44 qui exercent sur le second bras 42 un effort fournissant à la raclette 46 qui est montée à l'aide d'un porte-lame 45 à l'extrémité du bras 42, une pression d'appui contre le corps de la sonde 10.

Les raclettes 46 peuvent être métalliques et ne gênent pas les mesures électriques de capacité puisqu'elles restent essentiellement parallèles aux électrodes 21, 22, 23 et se trouvent pendant les périodes de mesure en contact avec la partie supérieure du corps 15, 16 de la sonde ou de la tête 18 qui sont en matière isolante et ne portent pas d'électrodes. L'ensemble de nettoyage 40 de la sonde 10 est en effet disposé pour l'essentiel au-dessus de la sonde 10 (figure 3). Cet ensemble de nettoyage ne peut pas non plus apporter de perturbation sensible à l'écoulement du matériau circulant le long de la sonde 10.

Les périodes de mise en rotation de la sonde 10, qui correspondent à des phases de nettoyage pendant lesquelles les raclettes 46 peuvent enlever sur toute la surface périphérique de la sonde, y compris sur les électrodes 21, 22, 23, des particules de matériau qui se seraient déposées, peuvent comprendre par exemple un, deux ou trois tours de sonde et présenter une durée totale de l'ordre de quelques secondes. De la sorte, le nettoyage peut être parfaitement efficace, sans que la durée d'interruption de la mesure effectuée avec la sonde soit gênante, compte tenu des vitesses habituelles d'écoulement des matériaux. Les opérations de nettoyage peuvent être répétée à intervalles réguliers ou non. La durée des intervalles entre opérations de nettoyage, qui correspond aussi aux périodes de mesure effective, est choisie en fonction de la nature du matériau examiné et de sa tendance à colmater, ainsi qu'en fonction de la vitesse d'écoulement du matériau sur la bande transporteuse. Ces intervalles peuvent être par exemple de l'ordre de quelques minutes. La commande de la mise en rotation de la sonde 10 et de son arrêt, de préférence dans une position de repos toujours identique, est effectuée en agissant directement sur le moteur d'entraînement 2 qui peut par exemple être un moteur à courant continu qui est mis en court-circuit lors des périodes d'immobilisation de la sonde 10 correspondant aux périodes de mesure. Cette mise en court-circuit périodique du moteur 2 peut être réalisée de façon entièrement automatique grâce à un circuit de temporisation extérieure, non représenté, qui fait partie d'une chaîne de commande ou de régulation. Un minirupteur 31 ou un capteur de position 28 associés au moteur 2 ou à la sonde 10 peuvent par exemple assurer le contrôler de l'arrêt du moteur 2 et donc de la sonde 10 dans la position de repos après un nombre prédéterminé de tours de la sonde 10 afin de commander la fin de chaque cycle de nettoyage. Compte tenu de la démultiplication réalisée entre le moteur 2 et la sonde 10, l'arrêt du moteur 2 peut entraîner également un arrêt instantané de la sonde 10.

Les circuits électroniques 200 coopérant avec les électrodes 21, 22, 23 pour permettre l'élaboration d'un signal représentatif du degré d'humidité du matériau analysé seront maintenant décrits en référence à la figure 5. Sur cette figure, on a désigné par la référence 215 la cellule de mesure constituée par l'électrode 21 et l'électrode 22 ou 23 de la sonde 10. Cette cellule de mesure 215 constitue un condensateur dont la capacité varie en fonction de la nature du matériau présent entre les électrodes et de la teneur en eau de ce matériau. Grâce à un étalonnage préalable effectué pour un matériau donné, la cellule 215 permet de suivre l'évolution de la teneur en eau du matériau puisque les variations de celle-ci se traduisent par des variations de capacité de la cellule 215. La cellule de mesure 215 est intégrée à un circuit oscillateur HF 210 qui fournit une tension alternative dont la fréquence varie en fonction de la capacité de la cellule 215 et donc en fonction de la teneur en eau du matériau analysé.

La structure même de l'oscillateur HF 210 est d'un type connu. Selon l'invention, l'oscillateur HF 210 est cependant associé à des étages de division de fréquence 220, 240 et à des étages d'adaptation d'impédance 230, 250 de manière à fournir en sortie sur la borne 255 un signal basse fréquence, par exemple de l'ordre de 7 kHz. Il s'ensuit que la liaison entre les circuits électroniques 200 disposés dans la cavité 17 de la sonde rotative 10 et les dispositifs d'affichage, de traitement ou de régulation solidaires du bâti 100 peut être réalisée à l'aide d'un collecteur de contact tournant 20, sans que des perturbations apparaissent. Les câbles de liaison entre le contact tournant 20 de la sonde 10 et les appareils d'affichage ou de traitement sont eux-mêmes pratiquement insensibles à l'environnement dans lequel se trouve le dispositif de mesure et peuvent présenter des longueurs importantes, de plusieurs dizaines de mètres par exemple, qui autorisent l'utilisation de sondes de mesure en combinaison avec un poste central de contrôle et de régulation. Au contraire, les sondes capacitives de l'art antérieur nécessitaient l'utilisation de câbles haute fréquence très sensibles aux perturbations et apportaient ainsi des limitations à l'utilisation des sondes capacitives de mesure.

L'oscillateur 210 doit à la fois conserver une marge de phase peu dépendante de la fréquence dans l'intervalle de fonctionnement (qui est de préférence compris entre 30 et 50 MHz) et surtout assurer une amplitude suffisante de l'oscillation et d'un niveau stable pour déclencher le système de division de fréquence. Pour cela, la tension stabilisée d'alimentation du circuit 200 est avantageusement choisie entre 3, 5 et 8 volts et se trouve de préférence voisine de 5 volts. Par ailleurs, l'élément 203 de commande de gain de l'oscillateur est avantageusement constitué par un transistor MOS à effet de champ à double grille. A titre d'exemple, on peut utiliser le modèle 40673 de la Société RCA qui présente un gain élevé (30dB), une transconductance importante et autorise une régulation importante du gain (50dB).

L'oscillateur 210 comprend deux inductances couplées 201 et 202. La première inductance 201 est montée en parallèle sur la cellule de mesure 215 tandis que la deuxième inductance 202 est connectée d'une part à la première grille du transistor MOS 203 et d'autre part au point milieu d'un pont diviseur constitué par les résistances 204 et 206 qui sont montées en série entre le pôle d'alimentation positive du montage et la masse. Le pont diviseur 204, 206 présente une forte résistance interne et en l'absence d'oscillations polarise positivement la grille $G_1$ du transistor 203. Le point de fonctionnement du transistor 203 est défini par la résistance interne du pont diviseur 204, 206 et par le potentiel de la grille $G_2$ du transistor 203, établi par le pont diviseur constitué des résistances 207 et 208. La résistance 213 polarise la source du transistor 203. Le montage en parallèle de la première inductance 201 et de la cellule de mesure 215 est connecté entre l'alimentation positive du montage et le drain du transistor 203. Les condensateurs 209, 205, 211 et 212 sont des condensateurs de découplage en haute fréquence. Le condensateur 209 est connecté en parallèle sur la résistance 207, le condensateur 205 est monté en parallèle sur la résistance 206, le condensateur 211 est connecté entre la grille $G_2$ et la source du transistor 203 et le condensateur 212 est monté en parallèle sur la résistance 213.

Le fonctionnement de l'oscillateur 210 est le suivant. En l'absence d'oscillations, la grille $G_1$ est polarisée positivement par le pont diviseur 204, 206, comme cela a été indiqué précédemment. Lorsque des oscillations se développent dans l'inductance 202, du fait que dans l'exemple choisi le transistor 203 est du type N à déplétion, un courant entre la grille $G_1$ et la source S prend naissance sur les crêtes positives des oscillations, ce qui polarise négativement la grille $G_1$, réduisant ainsi le gain du transistor et par suite l'amplitude des oscillations. Une diminution de l'amplitude du signal HF aux extrémités de la deuxième inductance 202 réduit le potentiel négatif de la grille $G_1$, et produit une augmentation du gain du transistor 203. Le niveau des oscillations est ainsi régulé.

La sortie de l'étage oscillateur 210, sur le drain du transistor 203, est reliée par l'intermédiaire d'un condensateur de liaison 214 à un premier étage diviseur de fréquence 220 comprenant un circuit 221 de division par onze en technologie ECL (c'est-à-dire à logique à couplage par les émetteurs). Le circuit 221 est associé à deux inductances 216, 217 interposées entre les bornes extérieures de l'alimentation stabilisée 254, 256 et l'étage oscillateur 210. Une résistance de polarisation 218 est également interposée entre l'entrée du circuit 221 et la borne d'alimentation positive du circuit oscillateur 210.

Un étage adaptateur d'impédance 230 fait suite au premier étage diviseur 220 et comprend un circuit série constitué par une diode 233, l'espace émetteur-collecteur d'un transistor 232 et une résistance 234, connecté entre les bornes d'alimentation 254 et 256. Une inductance 231 est en outre montée entre la sortie de l'étage diviseur de fréquence 220 et la base du transistor 232.

Un second étage diviseur de fréquence 240 est connecté à la suite de l'étage adaptateur 230 et comprend un circuit intégré CMOS 241 associé à un condensateur 242. Cet étage peut réaliser par exemple une division par 512 de la fréquence du signal issu de l'étage adaptateur 230.

Un dernier étage adaptateur d'impédance 250 pouvant comprendre un circuit intégré 251, une résistance de sortie 253, ainsi qu'un condensateur 252 de filtrage de l'alimentation stabilisée peut être monté en sortie du deuxième étage diviseur 240. De la sorte, sur la borne de sortie 255 du circuit électronique 200 placé dans la sonde 10, on dispose d'un signal BF dont la fréquence est fonction du degré d'humidité du matériau dans lequel est plongée la sonde, et qui est peu sensible aux parasites extérieurs. Une conversion fréquence-tension peut alors être effectuée dans un dispositif localisé à distance de l'ensemble de mesure constitué par la sonde 10, ses moyens de mise en rotation 2 à 8, son dispositif de nettoyage 40 et son bâti 100. En effet, la ligne de transmission des signaux située entre le contact tournant 20 et la prise 30 ou entre la prise 30 et l'ensemble de traitement ou de régulation, non représenté, n'introduit plus les perturbations inhérentes aux dispositifs de l'art antérieur. Par ailleurs, du fait du nettoyage périodique et efficace de la sonde 10, les signaux transmis depuis la borne 255 correspondent bien à l'état réel du matériau s'écoulant auprès de la sonde 10.

## Revendications

1. Dispositif de mesure de la teneur en eau de matériaux granulaires ou pulvérulents, notamment de matériaux en mouvement sur une bande transporteuse ou dans une conduite, du type comprenant une sonde capacitive (10) munie d'au moins deux électrodes (21, 22) séparées par une zone isolante (27) et en contact avec le matériau à étudier, la sonde présentant un corps cylindrique (15, 16); un bâti (100) de support de la sonde capacitive; et un circuit oscillateur haute fréquence (210) associé aux électrodes afin de fournir une tension alternative de fréquence variable avec la teneur en eau; la sonde (10) étant montée sur le bâti par l'intermédiaire de paliers de manière à pouvoir présenter un mouvement de rotation sur elle-même par rapport au bâti (100), caractérisé en ce que l'axe de la sonde (10) est disposé sensiblement selon la direction de déplacement des matériaux en mouvement, en ce que le dispositif comprend en outre des moyens spécifiques (2, 3) d'entraînement en rotation de la sonde (10) par rapport au bâti (100) par intermittence à intervalles réguliers pendant un temps limité et des moyens de nettoyage (40) montés sur le bâti (100) et coopérant avec le corps cylindrique (15, 16) de la sonde pendant les mouvements de rotation de celle-ci, en ce qu'une mesure de teneur en eau du matériau examiné est effectuée de façon permanente lorsque la sonde est en position de repos, et en ce que la position axiale de la sonde (10) est maintenue inchangée lors du passage de sa position de repos à sa position de rotation sur elle-même ou vice-versa.

2. Dispositif selon la revendication 1, caractérisé en ce que les moyens de nettoyage (40) comprennent au moins une raclette (46) supportée par un bras (41, 42) relié au bâti (100), et appliquée contre la surface du corps cylindrique de la sonde (10).

3. Dispositif selon la revendication 1, caractérisé en ce que les moyens de nettoyage (40) comprennent plusieurs raclettes distinctives (46) alignées le long d'une génératrice du corps cylindrique de la sonde (10) et supportées chacune de manière indépendante par un bras (41, 42) relié au bâti.

4. Dispositif selon la revendication 2 ou la revendication 3, caractérisé en ce que chaque raclette (46) est reliée au bâti par l'intermédiaire d'un bras articulé (41, 42) et en ce que des éléments souples (44) sont associés à l'articulation du bras (43) pour transmettre à la raclette correspondante (46) une pression d'appui sur le corps de la sonde (10).

5. Dispositif selon l'une quelconque des revendications 1 à 3, caractérisé en ce que le corps cylindrique de la sonde (10) est prolongé à l'avant par une partie tronconique (18) et en ce qu'au moins une raclette (46) supportée par un bras (41, 42) relié au bâti est appliquée contre la surface de la partie tronconique (18) de la sonde (10).

6. Dispositif selon l'une quelconque des revendications 1 à 5, caractérisé en ce que la sonde (10) est montée de manière à pouvoir tourner sur deux ensembles de roulement (13, 19) disposés à la partie inférieure de deux montants (104, 103) du bâti et en ce que les moyens d'entraînement en rotation de la sonde par rapport au bâti comprennent un groupe moto-réducteur (2, 3, 3') disposé dans le bâti (100) au-dessus de la sonde (10), et capable d'entraîner celle-ci en rotation par sa partie arrière (12).

7. Dispositif selon l'une quelconque des revendications 1 à 6, caractérisé en ce que le montant (103) du bâti qui supporte la partie avant de la sonde (10) présente un nez (108) en forme d'ogive disposé selon l'axe de la sonde (10).

8. Dispositif selon l'une quelconque des revendications 1 à 7, caractérisé en ce qu'il comprend une première électrode centrale (21) constituée par une plaque conductrice incurvée, disposée longitudinalement à la périphérie du corps cylindrique isolant (16) de la sonde dans la partie inférieure (18) de ce corps lorsque la sonde est en position de repos, et une deuxième électrode latérale comprenant deux plaques conductrices incurvées (22, 23) disposées longitudinalement à la périphérie du corps cylindrique (16) de la sonde à faible distance de part et d'autre de la première électrode centale (21).

9. Dispositif selon l'une quelconque des revendications 1 à 8, caractérisé en ce qu'il comprend des circuits électroniques (200) disposés à l'intérieur (17) du corps cylindrique (15, 16) de la sonde et reliés d'une part aux électrodes (21, 22, 23) de la sonde (10) par des connexions fixes (24, 25) et d'autre part à des prises extérieures (30) à l'aide d'un contact tournant (20).

10. Dispositif selon la revendication 9, caractérisé en ce que les circuits électroniques (200) disposés à l'intérieur (17) du corps cylindrique de la sonde (10) comprennent un oscillateur haute fréquence (210) et des circuits diviseurs de fréquence (220, 240) associés à des circuits d'adaptation (230, 250) afin de permettre la fourniture d'un signal basse fréquence sur ledit contact tournant (20), tandis que des signaux haute fréquence sont appliqués sur les électrodes (21, 22, 23) de la sonde (10, 215).

11. Dispositif selon la revendication 10, caractérisé en ce que les circuits électroniques (200) disposés à l'intérieur (17) du corps cylindrique de la sonde (10) sont alimentés avec une tension continue comprise entre environ 3, 5 et 8 volts et de préférence voisine de 5 volts, en ce que la fréquence de l'oscillateur (210) est comprise entre environ 10 et 100 MHz et de préférence comprise entre 35 et 45 MHz et en ce que la fréquence de sortie du signal basse fréquence fonction de la teneur en eau du matériau examiné est comnprise entre environ 5 et 10 kHz et de préférence voisine de 7 kHz.

## Claims

1. Device for measuring the moisture content of granular or powder materials, particularly materials in movement on a conveyor belt or in a pipe, of the type comprising a capacitative probe (10) provided with at least two electrodes (21, 22) separated by an insulating zone (27) and in contact with the material being examined, said probe having a cylindrical body (15, 16) a support frame (100) for the capacitative probe, and a high frequency oscillator circuit (210) associated with the electrodes in order to provide an alternating voltage of frequency variable with the moisture content; said probe (10) being mounted on the support frame by means of bearings so as to be able to rotate about its own axis with respect to said support frame (100), characterized in that the axis of the probe (10) is situated substantially in the moving direction followed by the moving materials, in that the device further comprises specific means (2, 3) for rotating the probe (10) with respect to the frame (100) intermittently at predetermined regular intervals for a limited time and cleaning means (40) mounted on the frame (100) and cooperating with the cylindrical body (15, 16) of the probe during the rotary movements of the latter, in that a measurement of the moisture content of the material examined is made continuously when the probe is in a resting position and in that the axial position of the probe (10) remains unchanged when said probe passes from its resting position to its position of rotation about its own axis, or vice-versa.

2. Device according to claim 1, characterized in that the cleaning means (40) comprise at least one scraper (46) supported by an arm (41, 42) connected to the frame (100) and applied against the surface of the cylindrical body of the probe (10).

3. Device according to claim 1, characterized in that the cleaning means (40) comprise several distinct scrapers (46) aligned along a generator of the cylindrical body of the probe (10) and each supported independently by an arm (41, 42) connected to the frame.

4. Device according to claim 2 or claim 3, characterized in that each scraper (46) is connected to the frame through an articulated arm (41, 42) and in that flexible elements (44) are associated with the articulation of the arm (43) to transmit to the corresponding scraper (46) a supporting pressure on the body of the probe (10).

5. Device according to any one of claims 1 to 3, characterized in that the cylindrical body of the probe (10) is extended forwards by a frusto-conic portion (18) and in that at least one scraper (46) supported by an arm (41, 42) connected to the frame is applied against the surface of the frusto-conic portion (18) of the probe (10).

6. Device according to any one of claims 1 to 5, characterized in that the probe (10) is mounted so as to be rotatable on two sets of bearings (13, 19) arranged at the lower part of two uprights (104, 103) of the frame and in that the rotary drive means of the probe with respect to the frame comprise a motor-reducing unit (2, 3, 3') arranged in the frame (100) above the probe (10) and capable of rotating the latter through its rear portion (12).

7. Device according to any one of claims 1 to 6, characterized in that the upright (103) of the frame (100) supporting the forward portion of the probe (10) has a shell-shaped nose (108) arranged along the axis of the probe (10).

8. Device according to any one of claims 1 to 7, characterized in that it comprises a first central electrode (21) constituted by an incurved conducting plate, arranged longitudinally to the periphery of the insulating cylindrical body (16) of the probe in the lower portion (18) of this body when the probe is in resting position, and a second lateral electrode comprising two incurved conducting plates (22, 23) arranged longitudinally to the periphery of the cylindrical body (16) of the probe at a short distance on each side of the first central electrode (21).

9. Device according to any one of claims 1 to 8, characterized in that it comprises electronic circuits (200) arranged inside (17) the cylindrical body (15, 16) of the probe and connected on the one hand to the electrodes (21, 22, 23) of the probe (10) through fixed connections (24, 25) and on the other hand to outer sockets (30) by means of a rotary contact (20).

10. Device according to claim 9, characterized in that the electronic circuits (200) arranged inside (17) the cylindrical body of the probe (10) comprise a high frequency oscillator (210) and frequency divider circuits (220, 240) associated with matching circuits (230–250) in order to permit the supply of a low frequency signal on said rotary contact (20) while high frequency signals are applied to the electrodes (21, 22, 23) of the probe (10, 215).

11. Device according to claim 10, characterized in that the electronic circuits (200) arranged inside (17) the cylindrical body of the probe (10) are supplied with a continuous voltage comprised between 3.5 and 8 volts and preferably close to 5 volts, in that the oscillator (210) frequency is comprised between about 10 and 100 MHz and preferably comprised between 35 and 45 MHz and wherein the output frequency of the low frequency signal which is a function of the moisture content of the material examined is comprised between about 5 and 10 kHz and preferably close to 7 kHz.

**Patentansprüche**

1. Vorrichtung, um den Wassergehalt eines pulvrigen oder granulatförmigen Materials, insbesondere eines auf einem Transportband oder in einer Leitung bewegten Materials, zu messen, des Typs, der eine kapazitive Sonde (10), die mit mindestens zwei durch eine isolierende Zone (27) voneinander getrennte, in Kontakt mit dem zu untersuchenden Material stehende Elektroden (21, 22) aufweist, wobei die Sonde einen zylindrischen Körper (15, 16), ein Traggestell (100) für die kapazitive Sonde und einen Hochfrequenzoszillator (210), der mit den Elektroden verbunden ist, um eine Wechselspannung zu liefern, deren Frequenz mit dem Wassergehalt variiert, umfasst, und wobei weiters die Sonde (10) auf dem Traggestell mittels Zapfen so befestigt ist, dass sie eine Rotationsbewegung um sich selbst bezüglich des Traggestells (100) ausführen kann, dadurch gekennzeichnet, dass die Achse der Sonde (10) zumindest angenähert in der Bewegungsrichtung des Materials verläuft, dass die Vorrichtung weiters spezifische Mittel (2, 3) aufweist, die die Rotation der Sonde (10) bezüglich des Traggestells (100) intermittierend in regulierbaren Intervallen während einer begrenzten Zeit bewirken, und dass Reinigungsmittel (40) auf dem Traggestell (100) angebracht sind, die mit dem zylindrischen Körper (15, 16) der Sonde während deren Rotation um sich selbst zusammenwirken, und dass eine Messung des Wassergehaltes des zu untersuchenden Materials permanent durchgeführt wird, während die Sonde in ihrer Ruhelage ist und dass die axiale Position der Sonde (10) unverändert aufrecht erhalten wird, während sie von der Ruhelage in ihre Lage bei der Rotation um sich selbst oder umgekehrt gelangt.

2. Vorrichtung nach Anspruch 1, dadurch gekennzeichnet, dass die Reinigungsmittel (40) zumindest eine Spachtel (46) umfassen, die mittels eine Stützarmes (41, 42) mit dem Traggestell (100) verbunden ist und die gegen die Oberfläche des zylindrischen Sondenkörpers (10) wirkt.

3. Vorrichtung nach Anspruch 1, dadurch gekennzeichnet, dass die Reinigungsmittel (40) mehrere unterschiedliche Spachteln (46) umfassen, die entlang einer Erzeugenden des zylindrischen Sondenkörpers (10) aufgereiht sind und die jede unabhängig mittels eines Arms (41, 42) mit dem Traggestell verbunden ist.

4. Vorrichtung nach Anspruch 2 oder 3, dadurch gekennzeichnet, dass jede Spachtel (46) am Gehäuse mittels eines verschwenkbaren Armes (41, 42) angelenkt ist und dass nachgiebige Elemente (44) mit den Armgelenken (43) verbunden sind, um auf die jeweilige Spachtel (46) einen Anpressdruck auf den Sondenkörper (10) zu übertragen.

5. Vorrichtung nach einem der Ansprüche 1 bis 3, dadurch gekennzeichnet, dass der zylindrische Sondenkörper (10) nach vorne durch einen konusförmigen Teil (18) verlängert ist und dass zumindest eine Spachtel (46), die von einem Arm (41, 42) getragen wird, der am Stützgestell befestigt ist, gegen die Oberfläche des konischen Teiles (18) der Sonde (10) wirkt.

6. Vorrichtung nach einem der Ansprüche 1 bis 5, dadurch gekennzeichnet, dass die Sonde (10) so befestigt ist, dass sie in zwei Lagern (13, 19), die im unteren Teil der beiden Träger (104, 103) des Traggestells angeordnet sind, verdrehbar ist und dass die Mittel zur Bewirkung der Sondenrotation bezüglich des Traggestells (100) eine darin oberhalb der sonde (10) vorgesehene Motor-Getriebegruppe (2, 3, 3'), umfassen, die es ermöglicht, die Sonde an ihrem hinteren Teil (12) in Rotation zu versetzen.

7. Vorrichtung nach einem der Ansprüche 1 bis 6, dadurch gekennzeichnet, dass der Träger (103) des Traggestells, der den vorderen Teil der Sonde (10) trägt, eine spitzbogenförmige Nase (108) fluchtend mit der Achse der Sonde (10) aufweist.

8. Vorrichtung nach einem der Ansprüche 1 bis 7, dadurch gekennzeichnet, dass sie eine erste zentrale Elektrode (21), bestehend aus einer gebogenen Leiterplatte, die in Längsrichtung am Umfang des zylindrischen Isolierkörpers (16) der Sonde im unteren Teil (18) dieses Körpers angebracht ist, wenn die Sonde in der Ruhelage ist, und dass eine zweite Längselektrode, bestehend aus zwei gekrümmten Leiterplatte (22, 23), die in Längsrichtung am Umfang des zylindrischen Körpers (16) der Sonde im kleinen Abstand voneinander und von der ersten zentralen Elektrode (21) angeordnet ist.

9. Vorrichtung nach einem der Ansprüche 1 bis 8, dadurch gekennzeichnet, dass im Inneren (17) des zylindrischen Körpers (15, 16) der Sonde elektronische Schaltungen (200) vorgesehen sind, die einerseits durch feste Verbindungen (24, 25) mit den Elektroden (21, 22, 23) der Sonde (10) und andererseits mit mittels Drehkontakten (20) mit Aussenkontakten (30) verbunden sind.

10. Vorrichtung nach Anspruch 9, dadurch gekennzeichnet, dass die im Inneren (17) des zylindrischen Körpers der Sonde (10) untergebrachten elektronischen Schaltungen (200) einen Hochfrequenzoszillator (210) und mit Adaptionsschaltungen (230, 250) verbundene Frequenzteiler (220, 240) aufweisen, um ein niederfrequentes Signal am Drehkontakt (20) und Hochfrequenzsignale an den Elektroden (21, 22, 23) der Sonde (10, 215) zu erreichen.

11. Vorrichtung nach Anspruch 10, dadurch gekennzeichnet, dass die elektronischen Schaltkreise (200), die im Inneren (17) des zylindrischen Körpers der Sonde (10) vorgesehen sind, mit einer Gleichstromspannung zwischen ungefähr 3,5 und 8 Volt, vorzugsweise etwa 5 Volt, versorgt werden, dass die Frequenz des Oszillators (210) zwischen ungefähr 10 und 100 MHz und vorzugsweise zwischen 35 und 45 MHz liegt, und dass die Ausgangsfrequenz des niederfrequenten Signales als Funktion des Wassergehaltes des zu untersuchenden Materials zwischen etwa 5 und 10 kHz und vorzugsweise im Bereich von 7 kHz liegt.

Fig. 1

Fig. 2

Fig. 5

0 095 425

Fig. 3

Fig. 4